# EUROPEAN PATENT APPLICATION

(11) **EP 1 983 041 A1**
(43) Date of publication of application: **22.10.2008**
(21) Application number: 05826127.2
(22) Date of filing: 30.12.2005
(51) Int. Cl.: C11D 9/02, A23K 1/00

(54) **METHOD FOR PRODUCING CALCIUM SOAPS FOR ANIMAL FEED**

(71) Applicant: Norel, S.A., 28007 Madrid (ES)
(72) Inventor: PABLOS PÉREZ, Enrique, 28007 Madrid (ES)
(74) Representative: Illescas, Manuel
(86) International application number: PCT/ES2005/070190
(87) International publication number: WO 2007/077266

(57) **Abstract**

Method for producing calcium soaps for animal feed. The invention consists of a novel process for producing calcium soaps, comprising the saponification of natural fats and oils with CaO, in which the reaction mass is heated and subjected to reduced pressure. In this way, calcium soaps with a fatty acid content of more than 80 % can be obtained without requiring any subsequent washing or concentration process. Said high fatty acid content renders the soaps particularly suitable for use as a component of animal feed. The applicability of said soaps for feed for monogastric animals is improved by adding glycerol and/or another emulsifying agent during the soap production process.

## Description

### FIELD OF THE INVENTION

The invention relates to a new method for producing calcium soaps rich in fatty acids, the calcium soaps thus produced and their use as ingredients in animal feed, particularly for monogastric animals.

### STATE OF THE ART

Methods for producing calcium soaps have been known for many years in the State of the Art. Soaps are generally made from natural animal or plant fats containing triglycerides that comprise fatty acids, usually long-chain fatty acids, attached to the glycerol skeleton, which form salts by means of a process of saponification in the presence of bases.

The fatty acids that most commonly form part of these triglycerides are long-chain fatty acids such as oleic, stearic, palmitic, myristic, lauric, linoleic and linolenic acids. Fatty acids with much shorter chains also appear, such as butyric, capric, caprylic and caproic acids.

Strong inorganic alkaline metal bases, such as sodium hydroxide or potassium hydroxide, are chosen as suitable bases for the saponification reaction. In general, alkaline soaps are produced and their use is limited to cosmetics.

In the production of calcium soaps calcium oxide (CaO) is added to the fats instead of adding alkaline metal hydroxide, which conditions the other parameters of the saponification reaction.

US patent US4642317 discloses a process that makes it possible to increase the proportion of fat fed to ruminants, without having a deleterious effect on the rumen microorganisms, which consists of supplying said animals with fatty acids in the form of previously prepared calcium salts. One of the examples of how to produce said salts from natural fats mentions the prior saponification of said fats with sodium or potassium hydroxide, the separation of the phase containing the alkaline metal salts and the subsequent dissolution of said phase in aqueous medium and mixing it with calcium salts.

US patents US4826694, US4853233 and US4909138 also disclose compositions for feeding ruminants wherein the main component (60-80% of the composition) is calcium or magnesium salts of longer-chain fatty acids (mainly with 14 to 18 carbon atoms), although it is also mentioned that the presence of triglycerides (5%-15%) in the end product is important for the composition to be useful as feed for ruminants. Said patents also disclose an apparatus and a process for producing the intended compositions, the process comprising, in this case, mixing one or more basic oxides (preferably CaO) in excess with the fatty acids and triglycerides and with water and, optionally, with an additional nutritional material as a source of proteins, thoroughly homogenising the mixture to bring about the exothermic reaction that forms the corresponding fatty acid salts, then spreading the mixture over a flat surface so that most of the water evaporates. It is mentioned that one of the preferred embodiments of the process involves pre-heating the fatty acids, e.g. to 80°C-100°C, before mixing them with the source of basic oxide, which is preferably lime (CaO).

Modifications to this basic process have subsequently been disclosed. For example, US patent US5234701 discloses the inclusion of an aqueous solution of sodium carbonate-bicarbonate, which is a residual effluent byproduct of a bicarbonate production process, as the aqueous medium for the calcium salt-forming reaction. This addition of sodium carbonate-bicarbonate seems to increase the efficiency of the process, thanks to the formation of a reaction intermediate consisting of the fatty acid sodium salt, which facilitates the formation of the corresponding calcium salt.

Other patents stress the importance of the reaction conditions to produce products with suitable characteristics when using sources of fatty acids wherein a high proportion thereof are present in the form of triglycerides. Thus, for example, US 5382678 discloses the importance of mixing the source of fatty acids with the source of alkaline earth metal prior to adding water so that the end product is not a powdery solid, but takes the form of tackless free-flowing granules. It also discloses the importance of maintaining the temperature of the reaction medium at a suitable value (40°C-130°C; 110°C is used in the examples) and for a sufficient time to hydrolyse most of the glycerides that are present, releasing fatty acids that produce the desired alkaline earth metal salts.

US 6229031 also highlights the importance of maintaining a suitable temperature for long enough to achieve the saponification of fatty starting materials with more than 45% triglycerides, again mentioning the need to supply the reaction mixture with additional heat as well as that generated by the exothermic reaction itself. In this case, the suitable temperature intervals mentioned are higher (90°C-250°C), with higher temperatures being preferred the lower the percentage of CaO that is added, which must be between 10% and 30% of the final composition.

US6576667 and US6774252 mention that the final triglyceride content must not exceed 5% of the total composition to prevent undesired alterations during storage, suggesting that the best way to achieve sufficient saponification when using fatty materials rich in triglycerides with a high omega-3 fatty acid content is to use 2 to 3 equivalents of CaO relative to the starting material and 2 to 5 equivalents of water relative to the CaO.

None of the documents of the state of the art that have been analysed achieve a fatty acid content of more than 60% by weight of soap in the calcium soaps manufactured, directly by saponification of natural fats without having to resort to costly high temperatures and laborious concentration processes of the soaps thus prepared. Achieving calcium soaps with a high fatty acid content is beneficial for animal feed in terms of at least 4 essential characteristics:
i. Formation of micelles that aid the digestion and assimilation of fats and other fat-soluble active substances (vitamins) in the livestock's feed, thereby aiding growth, milk production and fattening.
ii. The addition of the feed itself which facilitates its handling, compression, pelletisation, granulation, storage and preservation.
iii. The inclusion of concentrated fat products in feeds makes the cost of the feed lower than when the products that they contain have a low fat concentration. The higher the fat concentration, the lower its cost per unit.
iv. The inclusion of calcium soaps with a high fatty acid content makes it possible to use a smaller proportion of soaps in the final composition of the feed than in the case of soaps with a lower fatty acid content or in the case of fatty materials that are not in soap form, these situations requiring the presence of larger quantities of the component of the composition that acts as a source of fatty acids to be as efficient in animal feed, thereby making the formulation more flexible and leaving space in the formula for other raw materials.

The key criterion for evaluating a fatty material is its gross energy content. This value basically depends on its gross energy content and its intestinal digestibility, which essentially depends on its capacity for solubilisation and micelle formation in the intestine. Due to the peculiarities of the digestive system of ruminants (in which supplementary fat affects the rumen microorganisms, which hydrogenate and saturate the fatty acids released in the rumen by triglyceride hydrolysis), the absorption of fats is different than in the case of monogastric animals. Therefore, any evaluation of the usefulness of a fat for animal feed will differ according to whether it is to be applied to the feed for ruminants or for monogastric animals.

As well as energy content, another important criterion for evaluating a fatty material is its availability and its relative price in relation to other energy sources. For these two reasons, there is growing interest in using fatty materials produced by processing fats from natural sources in animal feed. In this area, the use of so-called soaps in animal feed has become more widespread, especially in feed for ruminants; but when used in feed for monogastric animals the results are worse than those obtained with the use of triglycerides, mainly in complete fats, as they lack glycerol, which is considered vital for the formation of micelles, which are necessary for the good digestibility of fats by said monogastric animals. The presence of glycerol (glycerine) in soaps means that they can be used in feed for monogastric animals, reducing the cost in relation to the use of triglycerides and allowing fats to be supplied in a form that is more suitable for animals, in the form of powder or granules, which is preferable to supplying fats in liquid form, as is the norm in the state of the art. Therefore, in the present invention, the resulting glycerol is not separated or eliminated after saponification of the fats and/or oils. Optionally, the method of the invention can also additionally include glycerol and/or emulsifiers that are authorised for animal feed during the process, producing soaps of the invention with a higher content of these compounds that can be more suitable for feed for monogastric animals.

### DESCRIPTION OF THE INVENTION

With the known soap production processes based directly on the saponification of fats, it is difficult to produce soaps with a fatty acid content of more than 60%, as has been mentioned above. The present invention discloses a process for producing soaps from alkaline earth metals, specifically calcium soaps, by saponifying natural fats, with a fatty acid content of more than 70% and preferably between 82-86%.

To achieve a concentration of fatty acids of more than 60%, with the known processes for producing soaps, generally sodium soaps, it is necessary to add a final concentration step to the process. To do this, soap produced with a fatty acid concentration of approximately 60% or less is washed and heated under pressure to 80-90°C. The soap thus heated and subjected to pressure is crushed in a vacuum chamber at approximately 2 bars of pressure. Once removed from the vacuum chamber and at atmospheric pressure and room temperature, the soap has lost part of its water content, presenting a pasty appearance and the required fatty acid concentration (>70%). This final concentration step under vacuum conditions is costly and gives the soap that is produced a sandy texture.

With the process of the present invention said final concentration step is not necessary, as calcium soaps with a high fatty acid content (82-86%) are directly obtained after the saponification process.

The process of the invention consists of mixing the natural fats or oils with the calcium oxide, then adding water to said mixture and applying heat in a high pressure reactor. After reacting the fats and/or oils with the calcium oxide, the reaction mass is allowed to cool. The calcium soap thus produced contains glycerol from the saponification of the triglycerides. No further washing, concentration (e.g. under vacuum conditions), or similar steps are necessary. The soap need only be formed using conventional techniques of extrusion into blocks, pelletisation, compression, granulation, etc.

One object of the present invention is, therefore, to protect a new process for producing calcium soaps with a fatty acid content that is higher than 80%. The scope of the invention also covers the embodiment of the process of the invention wherein additional quantities of glycerol and/or another emulsifying agent that is authorised for animal feed are added prior to the saponification reaction, producing a soap with a lower percentage of fatty acids in relation to the total composition but with a higher glycerol content and/or with the additional presence of another emulsifying agent.

Another object of the present invention is to protect calcium soaps produced according to the patented process and characterised in that they have a high fatty acid content.

The last object of the present invention is the use in animal feed of calcium soaps with a high fatty acid content and, optionally, with an increased glycerol content and/or the additional presence of an emulsifier that is authorised for animal feed, particularly when said use is in feed for monogastric animals.

### DETAILED DESCRIPTION OF THE INVENTION

The fats or oils must be added once they have been heated to a temperature that is slightly above their melting points, generally between 20 and 50°C.

It is necessary to add the same number of moles of calcium oxide as of fatty acids in the natural source of fats or oils to be saponified (Ratio 1:1).

The calcium oxide is added to the heated fats and/or oils and then water is added to said mixture. The amount of water to add will be at least the stoichiometric quantity needed for all the CaO that is added to become CaOH, and any possible excess above this quantity must be inversely proportional to the final fatty acid concentration that is to be achieved in the calcium soap. Thus, a 6% excess of water will result in a fatty acid concentration of about 84% in the calcium soaps produced according to the patented method, having subtracted the 10% of unreacted glycerol produced during saponification, which, as has been mentioned above, is included in the final composition of the calcium soap produced rather than being separated or washed as is traditionally the case with other processes disclosed in the prior art. The presence of glycerol (glycerine) in the final composition of the feed is particularly useful for monogastric animals (pigs, chickens, etc.), as it aids the digestibility of fats thanks to the formation of micelles in these animals.

If additional glycerol and/or another emulsifying agent that is authorised for animal feed is to be included, said compounds may be added at the same time as the calcium oxide is added, prior to adding the calcium oxide or after said addition. It is preferable to add the glycerol and/or the emulsifying agent at the same time as the compound that is the source of calcium ions (calcium oxide) is added. In any case, the glycerol and/or the emulsifying agent must be added before adding the water, so that the glycerol is already present at the time of saponification and is evenly distributed and mixed. It is thereby possible to achieve a perfect fraction with the oleic fraction in a short time.

The glycerol used in this invention is preferably unrefined glycerol. The proportion of glycerol that is added will vary according to the percentage that is to be present in the end product and it will also depend whether or not another emulsifier is also added, but it generally ranges between 4% and 12%.

The optional emulsifier may be any of those present on the European Union's positive list for use in animal feed. The proportion to be added in each case will vary according to criteria such as its emulsifying capacity and its cost.

The mixture of fats and/or oils + calcium oxide + water + the optional glycerol components and/or emulsifying agent is heated to more than 100 °C in a stainless steel reactor, said mixture being subjected to a pressure of 2 bars. The preferred temperature range is 100-150°C and the preferred pressure range 2 to 4 bars.

Any natural source of fats and/or oils can be used, whether of animal or plant origin. Said source of fat and/or oil may be added as it is, or treated previously, e.g. to eliminate the unpleasant odour thereof.

The above-described process may be carried out in batches, continuously or semi-continuously. The batch process begins with the reagents and ends when calcium soaps are produced beginning again by adding new reagents (fats and/or oils together with CaO and water). The continuous process, however, is not interrupted, except for periodic maintenance and cleaning of the facilities. The fats and/or oils are continually added, together with CaO and the water sequentially, and the calcium soap rich in fatty acids is obtained without stopping. The semi-continuous process is a mixture of the above. It is a continuous process, but only lasts for a certain number of preprogrammed cycles.

The addition of the reagents, their dosage, and the control of the reaction parameters may be automatically operated, including a computerised means comprising a program that can be adapted to the aforementioned types of process (batch, continuous or semi-continuous) and to the production requirements.

The liquid calcium soap produced after saponification under the aforementioned reaction conditions is allowed to cool and is moulded, formed or extruded into any form that is commonly used in animal feed: bars, blocks, fibres, balls, tablets, pills, pellets, etc.

The calcium soap thus produced is used as an ingredient in animal feed, particularly for monogastric animals, as their digestive systems have greater difficulties assimilating fats.

The use of calcium soaps made from fats rather than fatty acids means that glycerol, an essential element in the digestion of fats in monogastric animals, is already present in the product and does not need to be added to the process of producing soaps from fatty acids.

The digestibility of fats in monogastric animals is more difficult when these fats are added to feeds in the form of free fatty acids than when they are added in the form of triglycerides. The addition of emulsifiers to feeds or to fats and/or oils significantly improves the digestibility of the fat. Glycerol is described as an emulsifying agent in different studies and is considered as such by the Union European in its list of additives for animal feed.

Therefore, a calcium soap produced from fats and/or oils and not made from free fatty acids will be of great use in monogastric animal feed due to the presence of glycerol from the fat and/or oil that is used.

## Claims

1. Process for producing calcium soaps with a fatty acid content of more than 80% directly after the saponification reaction, without subjecting the resulting soap to any washing or concentration by any means, particularly under vacuum conditions, **characterised by**:
- previously heating natural fats, natural oils or mixtures of the two to a temperature that is slightly higher than their respective melting points;
- mixing the natural fat and/or oil in a 1:1 proportion with calcium oxide (CaO);
- adding a quantity of water to the aforementioned mixture of natural fats and/or oil and CaO that is at least the stoichiometric quantity needed for the CaO that is added to become CaOH;
- heating said reaction mixture to a temperature of between 100-150°C whilst subjecting it to a pressure of 2 to 4 bars.

2. Process according to claim 1, **characterised in that** after the first step, once the saponification reaction has taken place, the liquid calcium soap that is produced is allowed to cool and is formed into fibres, bars, tablets, blocks and any other form used in animal feed.

3. Process according to either of claims 1 or 2, **characterised in that** the natural fats and/or oils are previously heated to a temperature of between 20 and 50 °C.

4. Process according to any of claims 1 to 3, **characterised in that** glycerol and/or another emulsifying agent that is authorised for animal feed is optionally added to the previously heated natural fats and/or oils.

5. Process according to claim 4, **characterised in that** the optional addition of glycerol and/or another emulsifying agent that is authorised for animal feed is carried out at the same time as the calcium oxide is added.

6. Process according to claim 4, **characterised in that** the optional addition of glycerol and/or another emulsifying agent that is authorised for animal feed is carried out before the calcium oxide is added.

7. Process according to claim 4, **characterised in that** the optional addition of glycerol and/or another emulsifying agent that is authorised for animal feed is carried out after the calcium oxide is added and before the water is added.

8. Calcium soap produced according to the patented method, **characterised in that** it has a fatty acid composition of more than 80 % by weight in relation to the weight of the final composition, calculated without taking into consideration the weight corresponding to the glycerol and/or another emulsifying agent that have been added during the soap production process.

9. Use of the calcium soap of claim 8, produced according to the method of claims 1 to 7, as an ingredient in animal feed.

10. Use, according to claim 9, **characterised in that** the feeds are preferably used to feed monogastric animals.
